# EUROPEAN PATENT SPECIFICATION

(11) **EP 1 924 032 B1**
(45) Date of publication and mention of the grant of the patent: **18.05.2011**
(21) Application number: 07702029.5
(22) Date of filing: 10.01.2007
(51) Int. Cl.: H04L 12/46, H04M 3/42

(54) **METHOD, APPARATUS AND SYSTEM FOR CONNECTING THE CALLED USER**
VERFAHREN, VORRICHTUNG UND SYSTEM ZUR VERBINDUNG MIT EINEM GERUFENEN NUTZER
PROCEDE, APPAREIL ET SYSTEME DE MISE EN COMMUNICATION DE L'UTILISATEUR APPELE

(30) Priority: 10.01.2006 CN 200610000279
(43) Date of publication of application: 21.05.2008
(73) Proprietor: Huawei Technologies Co., Ltd., Longgang District, Shenzhen Guangdong 518129 (CN)
(72) Inventor: ZHU, Dongming, Shenzhen Guangdong 518219 (CN); DUAN, Xiaoqin, Shenzhen Guangdong 518219 (CN)
(74) Representative: Kreuz, Georg Maria
(86) International application number: PCT/CN2007/000097
(87) International publication number: WO 2007/079688

(56) References cited:
- CN-A- 1 391 396
- US-A1- 2005 041 787
- US-A1- 2005 071 455

## Description

### Field of the Technology

The present invention relates to communication technologies, and particularly, to a method, an apparatus and a network system for service request delivery.

### Background of the Invention

Since Release 5 (R5) of the 3^{rd} Generation Partnership Project (3GPP), the Universal Mobile Telecommunications System (UMTS) core network has been divided into three subsystems: a Circuit Switched (CS) domain, a Packet Switched (PS) domain and an IP Multimedia Subsystem (IMS).

The CS domain is used for providing users with connections of circuit switched service. The CS domain includes:
a Mobile Switching Center (MSC) (which may be further divided into MSC server and CS - Media Gateway Function (CS-MGW)) for performing switching and signaling control functions in circuit switched services;
a Gateway Mobile Switching Center (GMSC) which is an MSC used for mobile user routing and addressing in a network, and may be integrated into the MSC or be an independent device; and
an InterWorking Function which is closely connected to the MSC and used for interworking between a Public Land Mobile Network (PLMN) and an Integrated Service Digital Network (ISDN), a Public Switched Telephone Network (PSTN) or a Public Data Network (PDN), and mainly for converting the signaling; the specific functions of IWFs vary according to different services and networks.

The PS domain is used for providing users with connections of packet switched service. The PS domain includes: a General Packet Radio Service (GPRS) support node (GSN) (including Serving GSN (SGSN) and Gateway GSN (GGSN)) and a Border Gateway (BG).

The SGSN and GGSN are used for transmitting data packages for packet switched service users; the service GSN (SGSN) provides a connection between a Core Network and a Radio Access System such as Base Station Subsystem (BSS) or Radio Network Subsystem (RNS), performs the functions of mobility management and session management in packet switched data services and manages the mobility and communication services of a Mobile Station (MS) in a mobile network; the GGSN acts as an interface between a mobile communication system and other PDNs and in addition performs the function of querying location information; both the SGSN and the GGSN may provide charging information.

The Border Gateway (BG) is used for interworking between two GPRS networks and ensuring the security of network interworking.

In addition, the common functional entities shared by the CS domain and the PS domain include:
a Home Location Register / Authentication Center (HLR / AuC). The HLR is used for managing subscription data and location information. The subscription data includes at least one of: a Mobile Station International ISDN Number (MSISDN), an International Mobile Subscriber Identity (IMSI), a Packet Data Protocol Address (PDP ADDRESS), subscribed telephony services, supplementary services and so on. The location information may include: a Mobile Switching Center/Visitor Location Register (MSCNLR) number, an SGSN number, or a Gateway Mobile Location Center (GMLC) address. The AuC is used for storing the authentication algorithm and key of a user.

The common functional entities shared by both a CS domain and a PS domain also include a Visitor Location Register (VLR) for handling various data of the subscribers currently visited, an Equipment Identity Register (EIR) for storing the user equipment identities such as an International Mobile station Equipment Identity (IMEI), and a Short Message Service Gateway MSC (SMS-GMSC/SMS IMSC).

The IMS is a subsystem added in the 3GPP R5 on the basis of the existing PS domain. The IMS employs the PS domain as a bearer channel for the transmission of its upper level control signaling and media data, adopts a Session Initiation Protocol (SIP) as an IMS service control protocol, and provides abundant multimedia services for subscribers by separating the service control from the bearer control, and by utilizing the characteristics of the SIP, i.e., simple, extensible and convenient for a media combination. The main functional entities of the IMS include: a Call Session Control Function (CSCF) for the control of subscriber's registration and session control, an Application Server (AS) for various kinds of service logic control, a Home Subscriber Server (HSS) for the management of the subscriber's subscription data in a centralized manner, and a Media Gateway Control Function (MGCF) and an IMS Media Gateway (IM-MGW) for the interworking between the IMS and the CS domain. A subscriber may access the IMS through a proxy CSCF (P-CSCF) in the visited network, and then a session control, a service invoking control and a service control interaction with an AS are performed by the serving CSCF (S-CSCF) of the home network. The HSS in the IMS, whose functionalities include those of the HLR, is the superset of the HLR. However, due to a factor of networking process and so on, the HSS of IMS and the HLR of CS/PS domain may be deployed as entities independent of each other in the practical networking projects.

The IMS architecture defined by 3GPP solves all the crucial operability problems of multimedia service over IP, such as roaming charging, QoS and security. Therefore, the architecture and corresponding idea are recognized by the industry. Both 3GPP2 and TISPAN define the corresponding IP multimedia network architecture and service systems according to a 3GPP model and with reference to the 3GPP model. Meanwhile, 3GPP has started research on the Interworking of WLAN access with 3GPP system (I-WLAN), Fixed Broadband IMS access (FBI), and the all-IP network (AIPN) which supports multiple access technologies. A subscriber may access the IMS according to the subscription of the subscriber through access networks of different access technologies with a single multi-mode terminal or terminals of various types, to obtain unified multimedia services, including VoIP services. There is a Voice Call Continuity (VCC) work item doing research on the service continuity between a CS domain call and a VoIP service provided by accessing the IMS through a WLAN, and solutions are put forward to solve the problems including a terminating network domain selection between CS domain and the IMS when a user acts as a called user, and a domain transfer between the CS domain and the IMS due to the move of a terminal, to ensure the service continuity and meet the demand of network and service development.

In the case that a user having subscribed to a VCC service acts as a called user, it is required in the VCC work item that the terminating network domain, i.e., the network domain used to deliver the incoming voice call, is selected by performing a synthetical determination based on network domain selection related factors, so as to provide better service experience such as ensuring a higher success ratio of connecting the called user, and selecting a method with better quality or fewer fees. The network domain selection related factors include at least one of: user's registration status in the CS domain, user's registration status in the IMS, service and subscription data, network selection policy or preference set by an operator or the user, the case whether there is an ongoing call in one domain, and the capability of IP Connectivity Access Network (IPCAN) via which accessing to the IMS.

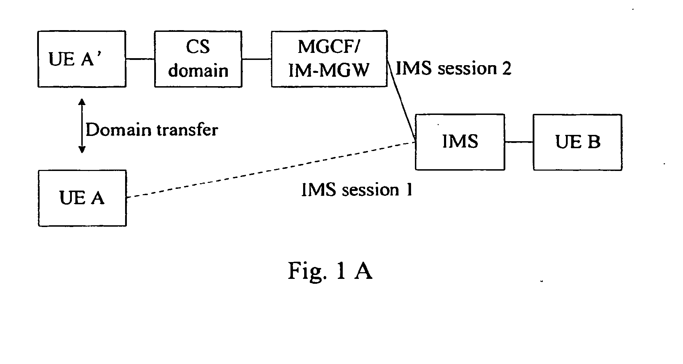

On the other hand, with the development of the research of the VCC work item, a static anchoring and IMS centralized control solution for performing CS-IMS bidirectional domain transfer has been selected. The basic idea of the solution is that, an Application Server (AS) is assigned to a user as a Call Continuity Control Function (CCCF) in the home IMS of the user, and all the control signalings of a CS domain call and an IMS session related to the user are anchored in the AS. The CCCF controls the call connection between a VCC user and the opposite user in a Third-party Call Control (3PCC) manner and implements a domain transfer as requested by the VCC user. As shown in Figure 1A, a call connection between a VCC user and an opposite user is segmented into two segments in an AS, i.e. the CCCF. The VCC user establishes a new connection with the AS in a transfer-in domain when a domain transfer is required. After the new connection is established successfully, the AS performs re-negotiation on the connection between the AS and the opposite user so as to enable the opposite user and the VCC user to perform voice interaction through the new connection. The CCCF controls the replacement of the two segments of sessions with the VCC user respectively in the transfer-in domain and transfer-out domain during a domain transfer process.

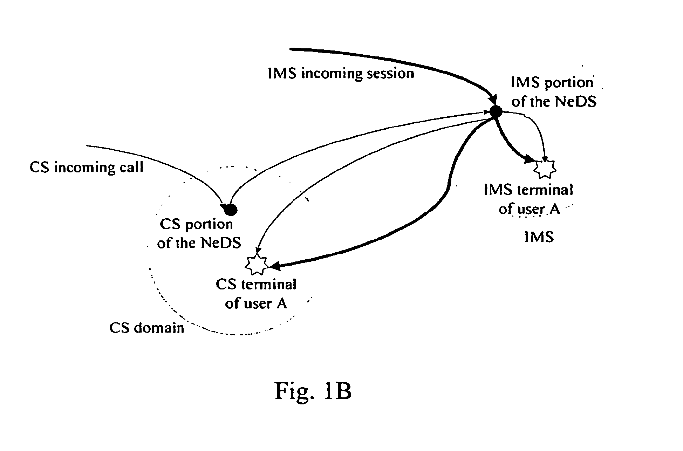

Thus, an incoming call destined to a user having subscribed to a "VCC" service is routed to an IMS first to perform the above anchoring in order to control a possible domain transfer in the subsequent call processes, and then an Network Domain Selection function implemented in the IMS (IMS-NeDS) selects the domain for delivering the incoming call to a VCC terminal based on above network domain selection related factors, i.e., directly delivering the incoming call in the IMS or delivering the incoming call to a CS domain as shown in Figure 1B.

A user often loses a network connection temporarily because of entering a coverage hole or dead angle when accessing a network through access networks of various wireless access technologies. For example, when entering an elevator or a basement temporarily, the user may lose the access to a WCDMA, GSM, CDMA or CDMA2000 network with a design objective of wide coverage, and thereby the user cannot be connected in the CS domain. In such a case, the user may be unreachable in a certain network domain (e.g. the CS domain) while reachable in another network domain (e.g. the IMS) since the IMS is a multiple access technologies oriented core network and the hot spot coverage provided by the WLAN as one of wireless access technologies for accessing the IMS can make up such a coverage hole. Since such temporary losing of the connection does not influence the user's registration status in the corresponding network domain, based on which an NeDS makes a terminating network domain selection, the terminating network domain determined according to above various network domain selection related factors may be a network domain in which a user is currently unreachable. Therefore, an issue is raised that it fails to connect a user while it is actually possible to connect the user successfully. In other words, because the handling for above situation has not been taken into consideration in the solution of terminating network domain selection discussed currently in the VCC work item, in the special situation mentioned above, the terminating network domain selection function added by the VCC work item cannot achieve the original intention of providing better service experience such as ensuring a higher success ratio of connecting the called user, on the contrary, it may further reduce the probability of connecting a user successfully, and thereby the service experience of the user is affected.

"Advanced call screening appliance" (US 2005/0041787 A1) provides a network interface device for processing a telephone call. A controller in the device analyzes access control rules and either routes an incoming phone call from a first communication interface to a second communication interface or prevents the incoming phone call from reaching the second communication interface.

"Method of re-directing IP-telephone calls to a mobile telephone" (EP 1596566 A1) describes a method of routing a telephone call from a calling party (CP) to an intended recipient (IR) associated to at least one Internet Telephone according to a routing routine (RR). According to the method, It is firstly determined whether the Internet Telephone of the IR is reachable, if the IR is reachable, the call will be routed to the IR; if the IR is not reachable by means of IP telephone, the call will be routed to a mobile telephone of the IR.

### Summary of the Invention

Embodiments of the present invention provide a method, an apparatus and a network system for service request delivery so as to improve the success ratio of connecting the called user.

A method for service request delivery, applied to a network system including two terminating network domains: a Circuit Switched (CS) network and an Internet Protocol (IP) Multimedia Subsystem (IMS), includes:
acquiring, by a network domain selection query entity in the network system, determination of a terminating network domain selection from a network domain selection entity (NeDS) in the network system upon receiving a service request destined to a served called user, and delivering the service request in a first terminating network domain of the two terminating network domains specified by the determination of the terminating network domain selection to connect the called user; and
re-attempting the service request delivery in a second terminating network domain of the two terminating network domains to connect the called user, when the called user is unreachable in the first terminating network domain.

A communication apparatus includes:
a module capable of receiving a request for querying for determination of a terminating network domain selection;
a module capable of determining the terminating network domain selection according to the request and selecting a second terminating network domain to re-attempt the service request delivery for connecting a called user when the called user is unreachablein a first terminating network domain specified by the determination of the terminating network domain selection; and
a module capable of sending the determination of the terminating network domain selection in response to the request.

A network system includes:
a network domain selection query entity capable of querying for determination of a terminating network domain selection when receiving an Internet Protocol (IP) Multimedia Subsystem (IMS) service request destined to a served called user, and performing the subsequent delivering of the IMS service request according to the determination of the terminating network domain selection; and
a Network Domain Selection entity (NeDS) capable of providing the network domain selection query entity with the determination of the terminating network domain selection, and sending an indication of a new terminating network domain selection determination to the network domain selection query entity and / or presetting data of Call Forwarding on Mobile Subscriber Not Reachable (CFNRc) in a Circuit Switched (CS) network when the called user is unreachable in a first terminating network domain specified by the determination of the terminating network domain selection, so as to deliver the IMS service request to a second terminating network domain to re-attempt the service request delivery for connecting the served called user.

In an embodiment of the present invention, an NeDS in a network re-attempts the call delivery to connect a user in another terminating network domain when it is determined that the called user is unreachable, in the current determined terminating network domain. Therefore, besides providing a capability of making a terminating network domain selection flexibly according to the policy or preference set by an operator and a user is provided, it is further ensured that the user can be connected in the case that the user is unreachable in a certain network domain (such as the CS domain) while the user is reachable in another network domain (such as the IMS).

In addition, in another embodiment of the present invention, the redirection information carried in a service request being handled currently is checked by an NeDS, or a GMSC or Visitor Mobile Switching Center (VMSC) for handling CFNRc in the CS domain, to avoid the problem (call looping) that the service request is forwarded circularly in two network domains due to the above compensatory handling adopted in both the IMS and the CS domain. Therefore, the above compensatory handling is perfected, and the service experience of the calling party and called party is improved.

### Brief Description of the Drawings

Figure 1A shows a schematic diagram illustrating implementation of VCC in an existing communication system;
Figure 1B shows a schematic diagram illustrating a terminating network domain selection in the prior art;
Figures. 2A and 2B show schematic diagrams illustrating connecting a user in an IMS when the user is unreachable in a CS domain in accordance with an embodiment of the present invention;
Figure 3 shows a flow chart of handling processes when a terminating network domain determined by an NeDS for the first time is a CS domain while a user is unreachable in the CS domain in accordance with an embodiment of the present invention;
Figure 4 shows a flow chart of handling processes when a terminating network domain determined by an NeDS for the first time is an IMS while a user is unreachable in the IMS in accordance with an embodiment of the present invention;
Figure 5 shows a flow chart of handling processes of presenting a service request from being forwarded circularly when a terminating network domain determined by an NeDS for the first time is an IMS while a user is unreachable in both the IMS and a CS domain in accordance with an embodiment of the present invention; and
Figure 6 shows a schematic diagram illustrating a structure of an NeDS in accordance with an embodiment of the present invention.

### Embodiments of the Invention

In accordance with an embodiment of the present invention, in the case that a user loses a connection to a network temporarily, a service request is delivered to another terminating network domain for connecting the user when determining that the user is unreachable, in a terminating network domain, so as to increase higher success ratio of connecting the user in addition to providing a capability of making a terminating network domain selection flexibly according to a policy or preference set by an operator or a called user.

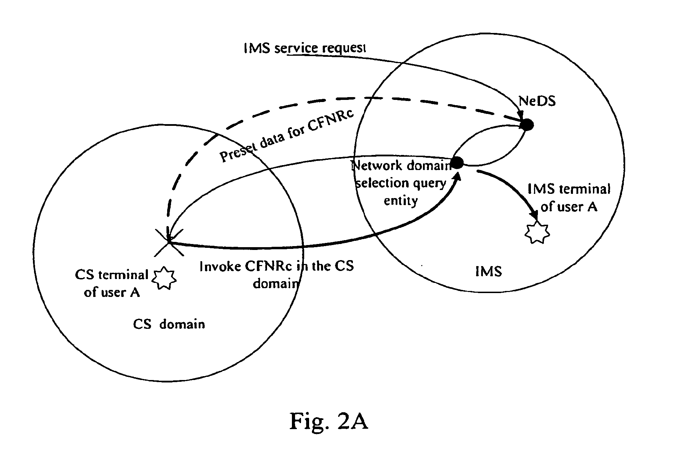

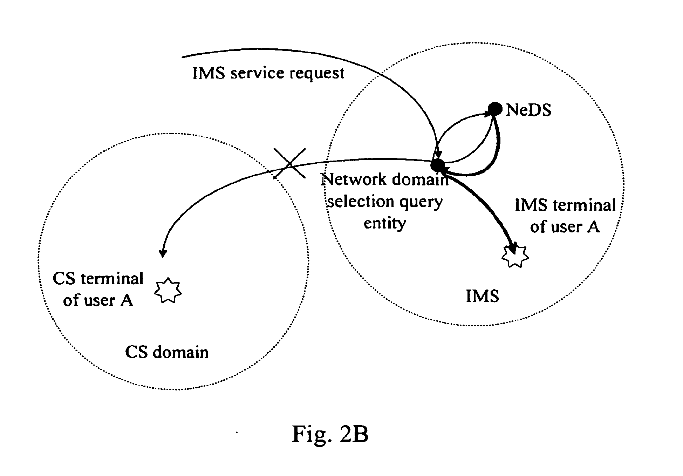

The network domain selection query entity in an IMS queries an NeDS for determination of a current terminating network domain selection upon receiving an IMS service request destined to a served called user and delivers the IMS service request in the terminating network domain specified by the determination of the terminating network domain selection. The NeDS makes a terminating network domain selection according to network domain selection related factors and provides the network domain selection query entity with the determination of the terminating network domain selection. As shown in Figure 2A, the NeDS presets data of CFNRc in the CS domain, and then in case that the terminating network domain is the CS domain, a GMSC or a VMSC for handling the CFNRc in the CS domain is enabled to invoke CFNRc upon determining that the called user A is unreachable in the process of delivering the service request in the CS domain, so as to route the service request back to the IMS for re-attempting the service request delivery in the IMS again. Or as shown in Figure 2B, when determining that the called user A is unreachable in the terminating network domain (such as the IMS), the NeDS sends an indication of a new terminating network domain selection determination to the network domain selection query entity, and controls the network domain selection query entity to route the service request to another terminating network domain (such as the CS domain) for re-attempting the service request delivery to connect the called user A.

The network domain selection query entity may be an S-CSCF assigned to a called user in the IMS. The S-CSCF queries the NeDS via an IP multimedia Service Control (ISC) interface defined in the IMS standard. The S-CSCF is hereinafter taken as an example in the present embodiment.

In order to determine that a called user is unreachable in a current terminating network domain, the NeDS may start a timer upon returning determination of the terminating network domain selection to a network domain selection query entity, and stop the timer when receiving the corresponding SIP message forwarded to the NeDS by the network domain selection query entity when the network domain selection query entity receives a response message returned by the called user, or the network domain selection query entity determines that the service request is delivered successfully, or the network domain selection query entity determines that the calling user decides to give up this service request. Therefore, the NeDS may determine that the called user is unreachable in the current terminating network domain when the timer expires, and accordingly the NeDS may instruct the network domain selection query entity to forward the service request to another terminating network domain for re-attempting the service request delivery to connect the called user again. This method is applicable to both the cases that the service request is routed to the IMS when the called user is unreachable in the CS domain and that the service request is routed to the CS domain when the called user is unreachable in the IMS.

The duration of the timer may be set, modified and queried for via a Ut interface defined in the IMS standard or via an Operation Support System (OSS) interface. An operator may set a relation between the duration of the timer and the duration of other timers such as a timer of Call Forwarding on No Reply (CFNRy) and a timer of Call Forwarding on Mobile Subscriber Not Reachable (CFNRc), and control whether a forwarding service to which the user has subscribed and which have been activated by the user is allowed to be invoked before a service request is routed to another terminating network domain for re-attempting delivery. In other words, if the call forwarding service is allowed to be invoked, the duration of the timer is set as longer than the duration of other timers such as the timer of CFNRy and the timer of CFNRc, and the corresponding call forwarding service may be invoked due to the expiration of the timer of CFNRy or the timer of CFNRc before the timer set in the NeDS expires, and the timer set in the NeDS is stopped after the called user is subsequently connected successfully after call forwarding. Otherwise, the duration of the timer is set as shorter than the duration of other timers such as the timer of CFNRy and the timer of CFNRc, and the service request is controlled to be delivered to another terminating network domain for re-attempting the service request delivery due to the expiration of the timer set in the NeDS before the corresponding call forwarding service is invoked due to the expiration of the other timers such as the timer of CFNRy and the timer of CFNRc.

The process of instructing the network domain selection query entity by the NeDS to re-attempt the service request delivery in another terminating network domain when determining that the called user is unreachablein the current terminating network domain includes: sending a message for canceling the delivery of this service request to the terminating side in which the service request delivery is attempted; and instructing the network domain selection query entity to deliver the service request to another terminating network domain for connecting the called user. The instruction is a new service request carrying routing information required for delivering the service request in another terminating network domain.

For a user in the CS domain, the NeDS may also preset data of CFNRc for the user in the CS domain, then in the case that the user is unreachable in the CS domain; the service request may be routed back to the IMS by invoking CFNRc. The data of CFNRc may be automatically set in the CS domain via an OSS interface by changing the related data in an HLR to which the called user belongs. If the called user has completed a location update in the CS domain before the setting, the HLR further inserts the data into a VLR in which the called user is currently located according to a standard subscriber data update method.

The GMSC or VMSC for handling CFNRc originally in the CS domain invokes the CFNRc so as to route a call back to the IMS when a call establishment request for the call, i.e. the service request, is received and it is determined that the called user is unreachable in the CS domain. The call establishment request may be a call establishment request which is routed to the CS domain since the first terminating network domain determined by the NeDS is the CS domain, or a call establishment request which is routed to the CS domain for the re-attempt of service request delivery since the first terminating network domain determined by the NeDS is the IMS and it is determined that the called user is unreachable in the IMS.

Further, in order to avoid call looping between different network domains in the case that the called user is unreachable in both the IMS and the CS domain, the service request routed from the CS domain back to the IMS carries redirection information, and the MGCF in a path through which a call is routed from the CS domain back to the IMS may convert the redirection information in a CS call establishment request into the redirection information in an IMS session establishment request. Then, when the network domain selection query entity forwards the IMS session establishment request to the NeDS to query for current determination of the terminating network domain selection, the NeDS determines, according to the redirection information carried in the service request, i.e., the IMS session establishment request, that the redirecting reason is CFNRc and the redirecting number is a user number of the served called user in the CS domain, and the NeDS determines not to select the CS domain for delivering the service request again.

The processes that the NeDS does not select the CS domain for delivering the service request again include: not selecting the CS domain as the terminating network domain when performing terminating network domain selection this time, and / or, not instructing the network domain selection query entity to re-attempt to deliver the service request in another terminating network domain (that is, the CS domain) in the case that it is determined that the called user is unreachable in the IMS too.

Alternatively, in order to avoid call looping between different network domains in the case that the called user is unreachable in both the IMS and the CS domain, redirection information may also be carried in an IMS session establishment request, i.e. the service request, forwarded by the S-CSCF to the CS domain in the case that the first terminating network domain determined by the NeDS is the IMS and the called user is unreachable in the IMS. The MGCF in a path through which a call is routed from the IMS to the CS domain may convert the redirection information in the IMS session establishment request into the redirection information in a CS domain establishment request. Thus, the GMSC or VMSC originally for handling CFNRc in the CS domain does not invoke CFNRc again and directly releases the call according to the redirection information when it is determined that the called user is unreachable again in the CS domain.

The redirection information includes at least the current accumulated times of forwarding and a reason of the last forwarding. The method for not invoking CFNRc in the CS domain according to the redirection information carried in the service request routed from the IMS to the CS domain in the case that it is determined that the called user is unreachable in the CS domain includes: judging, by the GMSC and VMSC originally for handling the CFNRc in the CS domain, whether this CFNRc is to be invoked according to the current accumulated times of forwarding and the maximum times permitted for forwarding set in the CS domain; or judging, by the GMSC and VMSC originally for handling CFNRc in the CS domain, whether this CFNRc is to be invoked by combining the current accumulated times of forwarding, the reason of the last forwarding, and the maximum times permitted for forwarding due to the same reason set in the CS domain.

On the other hand, as an IMS session establishment request for an IMS incoming session, i.e., a service request received in the IMS, may not be appropriate to be directly delivered to the CS domain for delivering (e.g., an IMS session establishment request for establishing a multimedia interaction). Therefore, in order to avoid the service fallback or even service failure which is possibly caused by directly routing the IMS incoming session to the CS domain, in case that the NeDS determines that the called user is unreachable in the IMS, the NeDS may further judge, according to the method name of the IMS service request being handled currently and / or the Session Description Protocol (SDP) description carried in the IMS service request, or a communication service identifier carried in the IMS service request, whether the service category of the service request being handled currently is appropriate to be delivered to the CS domain for delivering, before instructing the network domain selection query entity to re-attempt to deliver the service request in another terminating network domain. If the service category of the service request being handled currently is appropriate to be delivered to the CS network, the NeDS instructs the network domain selection query entity to attempt to deliver the service request in the CS domain; otherwise, the NeDS may not perform any handling, and waits for the session release of time out process or the originating side gives up the establishment of the session.

The following description is given by respectively taking the case that the first terminating network domain is the CS domain or the first terminating network domain is the IMS as an example.

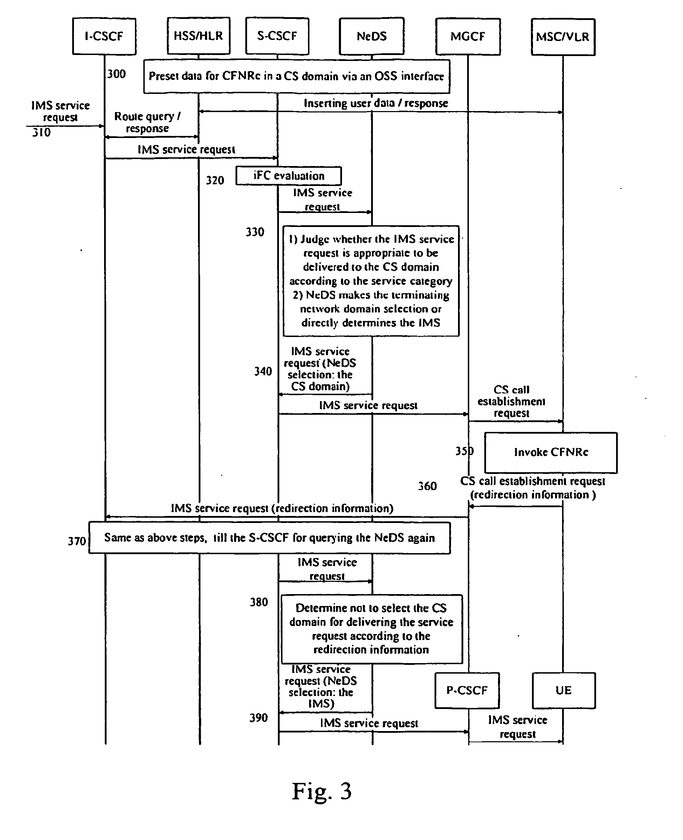

As shown in Figure 3, the following describes processes of delivering a service request to another terminating domain network for re-attempting the service request delivery in a method of presetting data of forwarding in the CS domain in the case that, the first terminating network domain determined by an NeDS is the CS domain and the called user is unreachable in the CS domain.

Step 300: The NeDS presets data of CFNRc of the CS domain in the HSS / HLR via an OSS interface. A forward-to number in the data is a virtual roaming number destined to the IMS (IMRN) (the composing of the IMRN should have a definite corresponding relation with a public user identifier of the called user in the IMS so as to enable the normal routing in the IMS when the session is routed back to the IMS subsequently).

The data is further updated by the HSS / HLR to the MSC / VLR in which the called user is currently located according to a standard process of inserting subscriber data if the user has registered in the CS domain.

Step 310: An I-CSCF receives an IMS service request, performs a routing query interaction with the HSS, and forwards the IMS service request to an S-CSCF assigned to the called user according to information returned by the HSS.

Step 320: The S-CSCF performs an initial Filter Criteria (iFC) evaluation according to subscriber's subscription data, and the S-CSCF, as the network domain selection query entity, forwards the IMS service request to the NeDS, as an AS, according to the matched iFC, to query for current determination of the terminating network domain selection.

Step 330: The NeDS makes a terminating network domain selection and returns current determination of the terminating network domain selection to the S-CSCF in a service request (In this embodiment, the NeDS determines to deliver the service request via the CS domain).

Step 340: The S-CSCF forwards the IMS service request to the MGCF according to the Request-URI in the IMS service request returned by the NeDS, and the MGCF performs subsequent routing processes till the converted CS call establishment request is routed to the MSC / VLR in which the called user is currently located.

The MGCF needs to perform the CS-IMS interworking processes defined in the standards. In addition, if what is filled in the Request-URI in the service request returned to the S-CSCF by the NeDS is a virtual roaming number destined to the CS domain (CSRN), the MGCF further needs to restore the user number of the called user in the CS domain, and then the subsequent processes, such as acquiring the roaming number in the CS domain, is performed according to the existing standard procedures; alternatively, if what is filled in the Request-URI in the service request returned to the S-CSCF by the NeDS is the called user's roaming number in the CS domain, the MGCF and other network elements in the CS domain may directly route the converted CS call establishment request to the MSC / VLR serving the user currently according to the roaming number.

Step 350: In this embodiment, CFNRc is invoked according to the standard procedure because the called user loses a radio connection temporarily and the MSC /VLR in which the called user is currently located can not get paging response from the called user. The forwarded CS call establishment request carries redirection information and is routed to the MGCF according to the IMRN as the forward-to number and destined to the IMS. This MGCF may be the same as that in Step 340 or a different one from that in Step 340, which does not affect this procedure.

Step 360: The MGCF accomplishes CS-IMS interworking handling and restores the IMRN. The CS-IMS interworking handling in this step includes: converting the redirection information in the CS domain into the redirection information in the IMS according to the related specifications in the TISPAN, and sending the converted IMS service request to the I-CSCF.

Step 370: The processes after the I-CSCF receives the IMS service request till the S-CSCF forwards the IMS service request to the NeDS according to the iFC again are the same as that in Steps 310-320.

Step 380: The NeDS determines not to select the CS domain for delivering the service request according to the redirection information (determining that the redirecting reason is CFNRc and the original called user's number, i.e., the redirecting number, is the called user's user number in the CS domain) and does not modify the Request-URI in the IMS service request returned to the S-CSCF.

Step 390: The S-CSCF forwards the IMS service request to a P-CSCF according to the Request-URI in the received IMS service request, and the IMS service request is delivered via the IMS for connecting the called user.

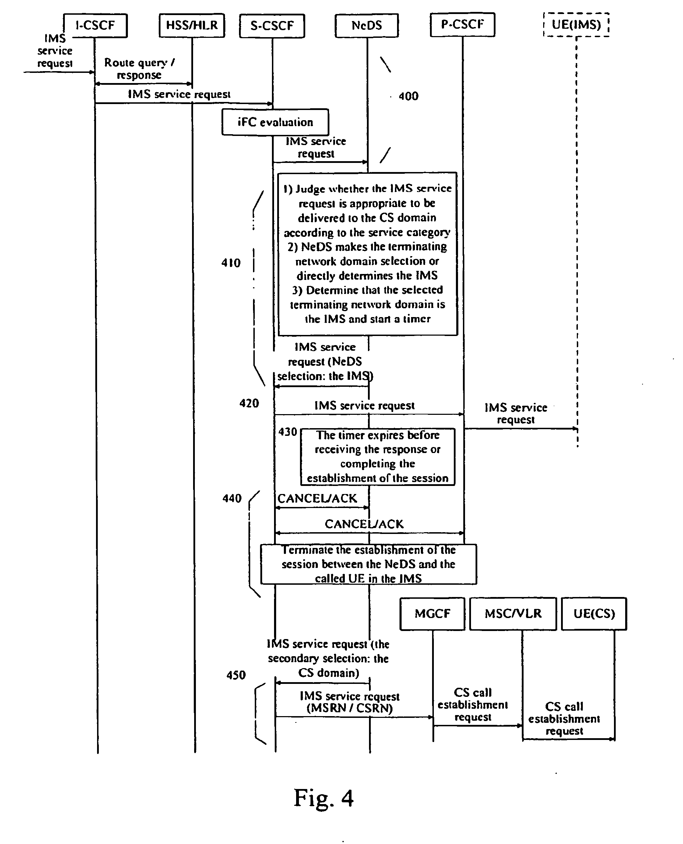

As shown in Figure 4, the processes that the NeDS performs determination and instructs the network domain selection query entity to deliver the IMS request service to another network for connecting the called user in the case that, the first terminating network domain is the IMS, and the called user is unreachable in the IMS, are described as follows.

Step 400: An I-CSCF forwards an IMS service request to an NeDS as an AS via a network domain selection query entity, i.e., the S-CSCF, after receiving the IMS service request. The handling in this step is the same as that in Steps 310 and 320.

Step 410: The NeDS makes a terminating network domain selection, returns current determination of the terminating network domain selection to the S-CSCF, and starts a timer. In this embodiment, the NeDS determines to deliver the service request via the IMS for connecting the called user, and therefore, the NeDS does not modify the Request-URI in the IMS service request to be routed back to the S-CSCF.

Step 420: The S-CSCF forwards the IMS service request to a P-CSCF according to the Request-URI in the received IMS service request, and then the P-CSCF connects the called user in the IMS.

Step 430: If the NeDS does not receive a response from the terminating side except for an 100 response (the 100 response is returned hop by hop and cannot indicate that the called user is connected successfully) or does not receive an eventual response indicating a success till the timer set by the NeDS expires, the NeDS determines to start the handling of the delivery attempt in another network domain after determining that the service request being handled is appropriate to be delivered to the CS network for delivering according to the service category of the service request being handled currently. In other words, if the NeDS receives a series of temporary responses from the called user, then the called user loses the network connection, and the session is not established successfully, NeDS may attempt the service request delivery in another terminating network domain; and this determining condition for stopping the timer may be set according to the corresponding policy set by an operator.

Step 440: The NeDS sends a service canceling request to the terminating side in the previous session first, and terminates the session connection being established in the IMS from the NeDS to the called user after receiving an acknowledge.

Step 450: The NeDS sends a new service request to the S-CSCF. A secondary selection, i.e., delivering the service request via the CS domain, is indicated by the modified Request-URI in the new service request. Similar to the former embodiment, the modified Request-URI may be a CSRN or a roaming number assigned to the called user in the CS domain, in a Tel Uniform Resource Identifier (Tel-URI) format.

The S-CSCF forwards the IMS service request to the MGCF according to the Request-URI in the IMS service request returned by the NeDS, and the MGCF performs the IMS-CS interworking and the subsequent routing handling and routes the converted CS call establishment request to the MSC / VLR in which the called user is currently located, and eventually connects the called user in the CS domain.

It is to be noted that this embodiment is described by taking the following example: the handling of instructing the S-CSCF to deliver a service request to the CS domain for connecting the called user in the case that the first terminating network domain is the IMS and the called user is unreachable in the IMS. However, when determining that the first terminating network domain is the CS domain, the NeDS may also return the service request to the S-CSCF to perform the subsequent routing control, and therefore, it may also be implemented by using the same handling method to instruct the S-CSCF to deliver a service request via the IMS for connecting the called user in the case that the first terminating network domain is the CS domain and the called user is unreachable in the CS domain.

The different handling methods for preventing a service request from call looping between two network domains in accordance with the present invention are hereinafter described with an embodiment.

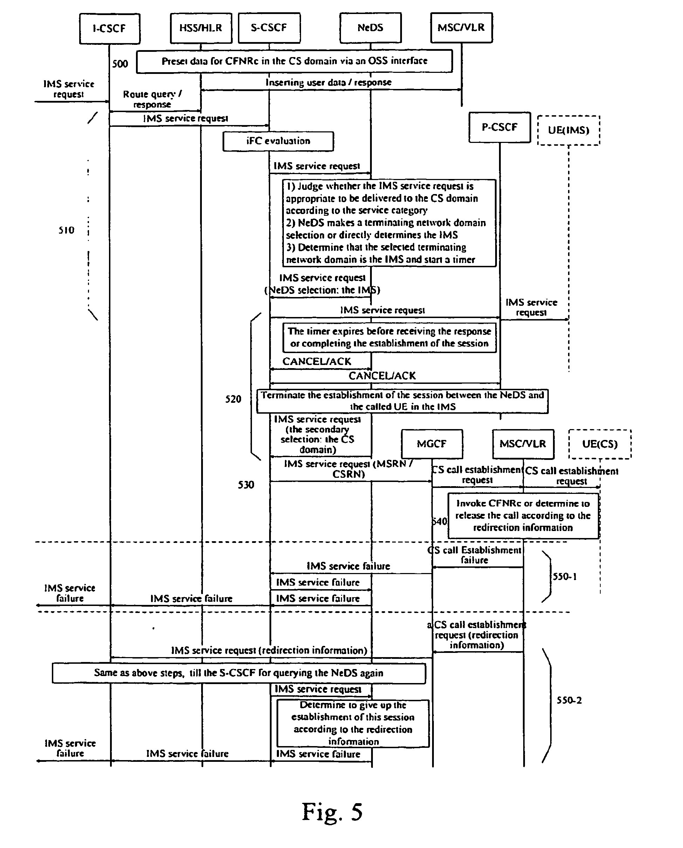

As shown in Figure 5, the handling for avoiding call looping in the case that the first terminating network domain determined by the NeDS is the IMS and the called user is unreachable in both the IMS and the CS domain is described as follows. (This embodiment may be regarded as the combination of the examples respectively shown in Figs.3 and 4.)

Step 500: Similar to Step 300 shown in Figure 3, the NeDS presets data of CFNRc in the CS domain, and the HSS / HLR inserts the updated data into the MSC /VLR in which the called user is currently located in the case that the user has registered in the CS domain.

Step 510: The processes from the step of "the I-CSCF receives an IMS service request" to the step of "the NeDS determines that the service request is to be delivered in the IMS first" are the same as that in Steps 400, 410 and 420 and will not be described herein.

Step 520: The NeDS determines that the called user is unreachable in the IMS at present and instructs that the service request is to be delivered to the CS domain for connecting the called user. Refer to Steps 430, 440 and 450 for the detailed handling of this step.

In order to avoid the subsequent call looping, the NeDS sends the new service request which carries redirection information of CFNRc in a method defined in the TISPAN to the S-CSCF.

Step 530: The S-CSCF forwards the IMS service request to the MGCF according to the Request-URI in the IMS service request returned by the NeDS, and the MGCF performs the IMS-CS interworking handling and the subsequent routing handling to route a converted CS Call establishment request to the MSC / VLR in which the called user is currently located.

In this step, the IMS-CS interworking handling performed by the MGCF includes converting the redirection information in the IMS into the redirection information in the CS domain according to the specifications in the TISPAN if the new IMS service request carries redirection information.

Step 540: The MSC / VLR in which the called user is currently located receives the CS Call establishment request, pages the called user but fails to receive a paging response from the called user, and then the MSC / VLR gets ready to invoke CFNRc.

Step 550-1: If the new service request sent to the S-CSCF by the NeDS in Step 520 carries the redirection information of CFNRc, the CS Call establishment request carries the redirection information of at least one CFNRc, and the MSC / VLR does not send a new call establishment request using the forward-to number set in Step 500 any longer but directly returns a call establishment failure message according to the maximum times permitted for forwarding or maximum times permitted for forwarding due to the same reason set by the network. The call establishment failure message is returned through the original path and the MGCF performs the CS-IMS interworking handling to return an IMS service failure response to the calling user in the IMS, and terminates this procedure of service handling.

If CFNRc in the CS domain cannot be suppressed due to various reasons (such as a large maximum times permitted for forwarding or maximum times permitted for forwarding due to the same reason set in the existing network) in the MSC / VLR, the handling in such a case is given in Step 550-2.

Step 550-2: The call is forwarded again and is returned to the IMS through the interworking performed by the MGCF, and then the call is forwarded to the S-CSCF via the I-CSCF. The S-CSCF queries the NeDS according to iFC. The forwarded CS call establishment request carries redirection information, and the NeDS determines to give up this session establishment handling according to the redirection information in the CS domain and returns an IMS service failure response to the originating side through the S-CSCF. Because this session has already passed a long path, the IMS service failure response returned to the originating side is transferred back along the established path and eventually transferred to the calling user.

As can be seen from Step 550-2, even if the MSC / VLR cannot suppress the CFNRc in the CS domain and the call is delivered back to the IMS again, the NeDS may accomplish the handling of avoiding the call looping according to only the redirection information in the CS domain. Therefore, if it is determined that the MSC / VLR cannot suppress the CFNRc in the CS domain (for example, the maximum times permitted for forwarding allowed in the existing network is large), or in order to avoid the influence on services in the existing network, the service request forwarded from the IMS to the CS domain in Step 520 may not carry the redirection information.

Finally, if the NeDS controls the handling of delivering a service request to another terminating network domain for attempt to connect the called user using the method of determining that the user is unreachable by the NeDS itself and sending determination of a new terminating network domain selection to the S-CSCF all along regardless of whether the current terminating network domain is the CS domain or the IMS, the NeDS, as a centralized control point, may perform the handling of avoid the call looping with a local handling record. Specifically, the NeDS stores a handling record of this service request, and does not instruct the S-CSCF to re-attempt the service request delivery, but returns an IMS service failure response to the originating side through the S-CSCF when it is determined according to the record that the service request delivery has been attempted in both the CS domain and the IMS in turn.

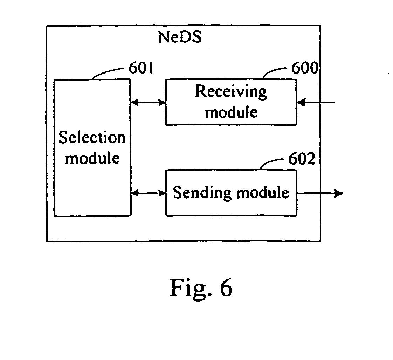

As shown in Figure 6, an NeDS in this embodiment includes a receiving module 600, a selection module 601 and a sending module 602. The receiving module 600 receives a request for querying for determination of a terminating network domain selection. The selection module 601 makes the terminating network domain selection according to the request and selects another network domain for delivering a service request in the case that the called user is unreachable in selected terminating network domain. The sending module 602 sends the determination of the terminating network domain selection in response to the request.

It is obvious that those skilled in the art may make various modifications and alternations to the present invention without departing from the scope of the present invention.

## Claims

1. A method for service request delivery, applied to a network system comprising two terminating network domains: a Circuit Switched, CS network and an Internet Protocol, IP Multimedia Subsystem, IMS, the method comprising:
acquiring, by a network domain selection query entity in the network system, determination of a terminating network domain selection from a network domain selection entity NeDS in the network system upon receiving a service request destined to a served called user, and **characterized by** delivering the service request in a first terminating network domain of the two terminating network domains specified by the determination of the terminating network domain selection to connect the called user;
re-attempting the service request delivery in a second terminating network domain of the two terminating network domains to connect the called user, when the called user is unreachable in the first terminating network domain.

2. The method of Claim 1. wherein the NeDS instructs the network domain selection query entity to re-attempt the service request delivery in the second terminating network domain when determining that the called user is unreachable in the first terminating network domain.

3. The method of Claim 2, wherein when the first terminating network domain is the IMS, the NeDS judges whether the service request is appropriate to be delivered to the CS network according to a service category of the service request, instructs the network domain selection query entity to re-attempt the service request delivery in the CS network if the service request is appropriate to be delivered to the CS network, and terminates service request delivery if the service request is not appropriate to be delivered to the CS network.

4. The method of Claim 3, wherein if the service category is used for establishing a voice interaction of a Voice over IP,VoIP service, or for establishing a video interaction which can be converted into a CS video service, or for establishing a multimedia interaction containing a VoIP voice component, it is determined that the service request is appropriate to be delivered to the CS network.

5. The method of Claim 2, wherein the NeDS starts a timer upon providing the network domain selection query entity with the determination of the terminating network domain selection, and determines that the called user is unreachable in the first terminating network domain when the timer expires; the network domain selection query entity sends a message to the NeDS to stop the timer upon receiving a response message returned by the called user, or upon determining that the service request is delivered successfully, or upon determining that the calling user determines to give up this service request delivery.

6. The method of Claim 5, wherein a duration of the timer is set, modified and queried for via a Ut interface or an Operation Support System, OSS interface.

7. The method of Claim 5, wherein,
a duration of the timer is set as longer than a duration of a timer of Call Forwarding on No Reply, CFNRy and / or a timer of Call Forwarding on Mobile Subscriber Not Reachable, GFNRc if a call forwarding service to which the user has subscribed and which has been activated by the user is allowed to be invoked before the NeDS re-attempts service request delivery in the second terminating network domain; or
the duration of the timer is set as shorter than the duration of the timer of CFNRy and / or the timer ofCFNRc, if the call forwarding service to which the user has subscribed and which has been activated by the user is not allowed to be invoked before the NeDS re-attempts service request delivery in the second terminating network domain.

8. The method of Claim 2, wherein the instructing the network domain selection query entity by the NeDS to re-attempt the service request delivery in the second terminating network domain comprises:
sending, by the NeDS, a message for canceling the delivery of the service request to a terminating side in which the service request delivery is attempted;
sending, by the NeDS, a new service request carrying routing information required for the service request delivery in the second terminating network domain to the network domain selection query entity.

9. The method of Claim 2, wherein the NeDS further stores locally a record of determination(s) of the terminating network domain selection of the service request, and the NeDS returns a service failure response to the originating side of the service request when the NeDS determines that the called user is unreachable in the first terminating network domain and the called user is also unreachable in the second terminating network domains according to the record.

10. The method of Claim 1, wherein when the first terminating network domain is the CS network, the NeDS presets data of CFNRc in the CS network for the served called user, and a Gateway Mobile Switching Center, GMSC or Visitor Mobile Switching Center, VMSC for handling CFNRc in the CS network routes the service request back to the IMS according to the data of CFNRc to re-attempt the service request delivery in the IMS again.

11. The method of Claim 10, wherein the service request routed back to the IMS as a result of CFNRc invocation carries redirection information of CFNRc; the NeDS determines not to select the CS network to deliver the service request according to the redirection information of CFNRc when determining the terminating network domain selection for the service request forwarded back from the CS network.

12. The method of Claim 10, wherein the service request routed back to the IMS as a result of CFNRc invocation carries redirection information of CFNRc; the NeDS does not instruct the network domain selection query entity to re-attempt the service request delivery in the CS network according to the redirection information of CFNRc when judging the terminating network domain selection for the service request forwarded back from the CS network and determining that the called user is also unreachable in the IMS.

13. The method of Claim 2, wherein the first terminating network domain is the IMS, the service request routed to the CS network to re-attempt the service request delivery further carries redirection information, and the NeDS presets data of CFNRc in the CS network for the served called user, a GMSC or a VMSC for handling CFNRc in the CS network judges whether to invoke CFNRc according to the redirection information when the called user is unreachable in the CS network.

14. The method of Claim 13, wherein the redirection information comprises times of forwarding, and CFNRc is invoked if the times of forwarding are fewer than the maximum times permitted for forwarding set in the CS network; or CFNRc invocation is forbidden if the times of forwarding are not fewer than the maximum times permitted for forwarding set in the CS network; or
the redirection information comprises a reason of forwarding and times of forwarding, and the CFNRc is invoked if the times of forwarding due to the reason are fewer than the maximum times permitted for forwarding due to the same reason set in the CS network; or the CFNRc invocation is forbidden if the times of forwarding due to the reason are not fewer than the maximum times permitted for forwarding due to the same reason set in the CS network.

15. A communication apparatus, comprising:
a module (600) capable of receiving a request for querying for determination of a terminating network domain selection;
a module (601) capable of determining the terminating network domain selection according to the request and selecting a second terminating network domain to re-attempt the service request delivery for connecting a called user when the called user is unreachable in a first terminating network domain specified by the determination of the terminating network domain selection;
a module (602) capable of sending the determination of the terminating network domain selection in response to the request

16. A network system, comprising:
a network domain selection query entity capable of querying for determination of a terminating network domain selection when receiving an Internet Protocol IP Multimedia Subsystem, IMS service request destined to a served called user, and performing the subsequent delivering of the IMS service request according to the determination of the terminating network domain selection;
a Network Domain Selection entity, NeDS capable of providing the network domain selection query entity with the determination of the terminating network domain selection, and sending an indication of a new terminating network domain selection determination to the network domain selection query entity and / or presetting data of Call Forwarding on Mobile Subscriber Not Reachable, CFNRc in a Circuit Switched, CS network when the called user is unreachable in a first terminating network domain specified by the determination of the terminating network domain selection, so as to deliver the IMS service request to a second terminating network domain to re-attempt the service request delivery for connecting the served called user.

17. The network system of Claim 16, wherein when determining the network domain selection for the IMS service request, the NeDS determines not to select the CS network for delivering the service request according to the redirection information of CFNRc in the CS network carried in the IMS service request, or when determining that the delivery attempt fails in the IMS, the NeDS does not instruct the network domain selection query entity to re-attempt the service request delivery in the CS network according to the redirection information of CFNRc in the CS network carried in the IMS service request.

18. The network system of Claim 16, wherein when determining that the called user is unreachable in the IMS, the NeDS sends the indication of the new terminating network domain selection determination carrying redirection information to the network domain selection query entity so as to enable the IMS service request to be routed by the network domain selection query entity to the CS network for re-attempting the service request delivery to carry redirection information; the GMSC or VMSC for handling CFNRc in the CS network judges whether the CFNRc is to be invoked according to the redirection information when the called user is unreachable in the CS network.

19. The network system of Claim 16, wherein the NeDS is further capable of storing locally a record of the determination(s) of the terminating network domain selection of this service request, and returning a service failure response to the originating side when determining that the called user is unreachable in the first terminating network domain and determining that the called user is also unreachable in the second terminating network domain according to the record.

20. The network system of any one of Claims 16 to 19, wherein the network domain selection query entity is a Service Call Session Control Function, S-CSCF assigned to the called user in the IMS, and the S-CSCF interacts with the NeDS via an IP multimedia Service Control, ISC interface.

## Patentansprüche

1. Verfahren zur Dienstanforderungsablieferung, das auf ein Netzwerksystem angewandt wird, das zwei terminierende Netzwerkdomänen: ein leitungsvermitteltes bzw. CS-Netzwerk und ein IP-Multimedia-Subsystem IMS des Internet-Protokolls umfasst, wobei das Verfahren die folgenden Schritte umfasst:
Beschaffen der Bestimmung einer Auswahl der terminierenden Netzwerkdomänen durch eine Netzwerkdomänen-Auswahlanfrageentität in dem Netzwerksystem von einer Netzwerkdomänen-Auswahlentität NeDS in dem Netzwerksystem beim Empfang einer für einen versorgten angerufenen Benutzer bestimmten Dienstanforderung und **gekennzeichnet durch** Abliefern der Dienstanforderung in einer ersten terminierenden Netzwerkdomäne der zwei terminierenden Netzwerkdomänen, die **durch** die Bestimmung der Auswahl der terminierenden Netzwerkdomäne spezifiziert wird, um den angerufenen Benutzer zu verbinden;
Neuversuchen der Dienstanforderungsablieferung in einer zweiten terminierenden Netzwerkdomäne der zwei terminierenden Netzwerkdomänen, um den angerufenen Benutzer zu verbinden, wenn der angerufene Benutzer in der ersten terminierenden Netzwerkdomäne nicht erreichbar ist.

2. Verfahren nach Anspruch 1, wobei die NeDS die Netzwerkdomänen-Auswahlanfrageentität anweist, die Dienstanforderungsablieferung in der zweiten terminierenden Netzwerkdomäne neu zu versuchen, wenn bestimmt wird, dass der angerufene Benutzer in der ersten terminierenden Netzwerkdomäne nicht erreichbar ist.

3. Verfahren nach Anspruch 2, wobei, wenn die erste terminierende Netzwerkdomäne das IMS ist, die NeDS gemäß einer Dienstkategorie der Dienstanforderung beurteilt, ob die Dienstanforderung dafür geeignet ist, an das CS-Netzwerk abgeliefert zu werden, die Netzwerkdomänen-Auswahlanfrageentität anweist, die Dienstanforderungsablieferung in dem CS-Netzwerk neu zu versuchen, wenn die Dienstanforderung dafür geeignet ist, an das CS-Netzwerk abgeliefert zu werden, und die Dienstanforderungsablieferung terminiert, wenn die Dienstanforderung nicht dafür geeignet ist, an das CS-Netzwerk abgeliefert zu werden.

4. Verfahren nach Anspruch 3, wobei, wenn die Dienstkategorie zum Herstellen einer Sprachinteraktion eines Voice-Over-IP- bzw. VoIP-Dienstes oder zum Herstellen einer Videointeraktion, die in einen CS-Videodienst umgesetzt werden kann, oder zum Herstellen einer Multimedia-Interaktion, die eine VoIP-Sprachkomponente enthält, verwendet wird, bestimmt wird, dass die Dienstanforderung dafür geeignet ist, an das CS-Netzwerk abgeliefert zu werden.

5. Verfahren nach Anspruch 2, wobei die NeDS einen Timer startet, nachdem der Netzwerkdomänen-Auswahlanfrageentität die Bestimmung der Auswahl der terminierenden Netzwerkdomäne bereitgestellt wurde, und bestimmt, dass der angerufene Benutzer in der ersten terminierenden Netzwerkdomäne nicht erreichbar ist, wenn der Timer abläuft; die Netzwerkdomänen-Auswahlanfrageentität eine Nachricht zu der NeDS sendet, um den Timer zu stoppen, wenn eine durch den angerufenen Benutzer zurückgegebene Antwortnachricht empfangen wird, oder wenn bestimmt wird, dass die Dienstanforderung erfolgreich abgeliefert wird, oder wenn bestimmt wird, dass der anrufende Benutzer bestimmt, diese Dienstanforderungsablieferung aufzugeben.

6. Verfahren nach Anspruch 5, wobei eine Dauer des Timers über eine Ut-Schnittstelle oder eine Schnittstelle des Operation Support System OSS eingestellt, modifiziert und abgefragt wird.

7. Verfahren nach Anspruch 5, wobei
eine Dauer des Timers länger als eine Dauer eines Timers des Call Forwarding on No Reply CFNRy und/oder eines Timers des Call Forwarding on Mobile Subscriber Not Reachable CFNRc gesetzt wird, wenn ein Anrufweiterleitungsdienst, den der Benutzer subskribiert hat und der durch den Benutzer aktiviert wurde, aufgerufen werden darf, bevor die NeDS eine Dienstanforderungsablieferung in der zweiten terminierenden Netzwerkdomäne neu versucht; oder
die Dauer des Timers kürzer als die Dauer des Timers des CFNRy und/oder des Timers des CFNRc gesetzt wird, wenn der Anrufweiterleitungsdienst, den der Benutzer subskribiert hat und der durch den Benutzer aktiviert wurde, nicht aufgerufen werden darf, bevor die NeDS eine Dienstanforderungsablieferung in der zweiten terminierenden Netzwerkdomäne neu versucht.

8. Verfahren nach Anspruch 2, wobei das Anweisen der Netzwerkdomäne-Auswahlanfrageentität durch die NeDS, um die Dienstanforderungsablieferung in der zweiten terminierenden Netzwerkdomäne neu zu versuchen, Folgendes umfasst;
Senden einer Nachricht durch die NeDS, die Ablieferung der Dienstanforderung an eine terminierende Seite, bei der die Dienstanforderungsablieferung versucht wird, abzubrechen;
Senden einer neuen Dienstanforderung durch die NeDS, die Routinginformationen führt, die für die Dienstanforderungsablieferung in der zweiten terminierenden Netzwerkdomäne erforderlich sind, zu der Netzwerkdomänen-Auswahlabfrageentität.

9. Verfahren nach Anspruch 2, wobei die NeDS ferner lokal eine Aufzeichnung von Bestimmung(en) der Auswahl der terminierenden Netzwerkdomäne der Dienstanforderung speichert und die NeDS eine Dienstmisserfolgantwort an die Ursprungsseite der Dienstanforderung zurückgibt, wenn die NeDS gemäß der Aufzeichnung bestimmt, dass der angerufene Benutzer in der ersten terminierenden Netzwerkdomäne nicht erreichbar ist und der angerufene Benutzer in der zweiten terminierenden Netzwerkdomäne auch nicht erreichbar ist.

10. Verfahren nach Anspruch 1, wobei, wenn die erste terminierende Netzwerkdomäne das CS-Netzwerk ist, die NeDS Daten des CFNRc in dem CS-Netzwerk für die versorgten angerufenen Benutzer voreinstellt und ein Gateway Mobile Switching Center GMSC oder Visitor Mobile Switching Center VMSC zum Umgang mit CFNRc in dem CS-Netzwerk die Dienstanforderung gemäß den Daten des CFNRc zu dem IMS zurückroutet, um die Dienstanforderungsablieferung in dem IMS nochmals neu zu versuchen.

11. Verfahren nach Anspruch 10, wobei die als Folge des CFNRc-Aufrufs zu dem IMS zurückgeroutete Dienstanforderung Umleitungsinformationen des CFNRc führt; und die NeDS gemäß den Umleitungsinformationen des CFNRc beim Bestimmen der Auswahl der terminierenden Netzwerkdomäne für die von dem CS-Netzwerk zurück weitergeleitete Dienstanforderung bestimmt, nicht das CS-Netzwerk zum Abliefern der Dienstanforderung auszuwählen.

12. Verfahren nach Anspruch 10, wobei die als Ergebnis des CFNRc-Aufrufs zu dem IMS zurückgeroutete Dienstanforderung Umleitungsinformationen des CFNRc führt; und die NeDS gemäß den Umleitungsinformationen des CFNRc nicht die Netzwerkdomänen-Auswahlanfrageentität anweist, die Dienstanforderungsablieferung in dem CS-Netzwerk neu zu versuchen, wenn die Auswahl der terminierenden Netzwerkdomäne für die von dem CS-Netzwerk zurück weitergeleitete Dienstanforderung beurteilt und bestimmt wird, dass der angerufene Benutzer auch in dem IMS nicht erreichbar ist.

13. Verfahren nach Anspruch 2, wobei die erste terminierende Netzwerkdomäne das IMS ist, die Dienstanforderung, die zu dem CS-Netzwerk geroutet wird, um die Dienstanforderungsablieferung neu zu versuchen, ferner Umleitungsinformationen führt und die NeDS Daten des CFNRc in dem CS-Netzwerk für den versorgten angerufenen Benutzer voreinstellt; und ein GMSC oder ein VMSC zum Umgang mit dem CFNRc in dem CS-Netzwerk gemäß den Umleitungsinformationen beurteilt, ob CFNRc aufzurufen ist, wenn der angerufene Benutzer in dem CS-Netzwerk nicht erreichbar ist.

14. Verfahren nach Anspruch 13, wobei die Umleitungsinformationen Zeiten des Weiterleitens umfassen und CFNRc aufgerufen wird, wenn die Zeiten des Weiterleitens weniger als die in dem CS-Netzwerk eingestellten maximalen zum Weiterleiten zulässigen Zeiten sind; oder CFNRc-Aufruf verboten wird, wenn die Zeiten des Weiterleitens nicht weniger als die in dem CS-Netzwerk eingestellten maximalen zum Weiterleiten zulässigen Zeiten sind; oder
die Umleitungsinformationen einen Grund des Weiterleitens und Zeiten des Weiterleitens umfassen und das CFNRc aufgerufen wird, wenn die Zeiten des Weiterleitens aufgrund des Grundes weniger als die in dem CS-Netzwerk eingestellten maximalen zum Weiterleiten zulässigen Zeiten aufgrund desselben Grundes sind; oder der CFNRc-Aufruf verboten wird, wenn die Zeiten des Weiterleitens aufgrund des Grundes nicht weniger als die in dem CS-Netzwerk eingestellten maximalen für Weiterleiten zulässigen Zeiten aufgrund desselben Grundes sind.

15. Kommunikationsvorrichtung, umfassend:
ein Modul (600) mit der Fähigkeit zum Empfangen einer Anforderung zum Abfragen zur Bestimmung einer Auswahl der terminierenden Netzwerkdomäne;
ein Modul (601) mit der Fähigkeit zum Bestimmen der Auswahl der terminierenden Netzwerkdomäne gemäß der Anforderung und zum Auswählen einer zweiten terminierenden Netzwerkdomäne, um die Dienstanforderungsablieferung zum Verbinden eines angerufenen Benutzers neu zu versuchen, wenn der angerufene Benutzer in der ersten terminierenden Netzwerkdomäne nicht erreichbar ist, die durch die Bestimmung der Auswahl der terminierenden Netzwerkdomäne spezifiziert wird;
ein Modul (602) mit der Fähigkeit zum Senden der Bestimmung der Auswahl der terminierenden Netzwerkdomäne als Reaktion auf die Anforderung.

16. Netzwerksystem, umfassend:
eine Netzwerkdomänen-Auswahlanfrageentität mit der Fähigkeit zum Erfragen der Bestimmung einer Auswahl der terminierenden Netzwerkdomäne beim Empfangen einer für einen versorgten angerufenen Benutzer bestimmten Dienstanforderung des IP-Multimedia-Subsystems IMS des Internetprotokolls und zum Durchführen des nachfolgenden Ablieferns der IMS-Dienstanforderung gemäß der Bestimmung der Auswahl der terminierenden Netzwerkdomäne;
eine Netzwerkdomänen-Auswahlentität NeDS mit der Fähigkeit, der Netzwerkdomänen-Auswahlanfrageentität die Bestimmung der Auswahl der terminierenden Netzwerkdomäne bereitzustellen und eine Indikation einer neuen Bestimmung der Auswahl der terminierenden Netzwerkdomäne zu der Netzwerkdomänen-Auswahlanfrageentität zu senden und/oder Daten des Call Forwarding on Mobile Subscriber Not Reachable CFNRc in einem leitungsvermittelten bzw. CS-Netzwerk voreinzustellen, wenn der angerufene Benutzer in einer durch die Bestimmung der Auswahl der terminierenden Netzwerkdomäne spezifizierten ersten terminierenden Netzwerkdomäne nicht erreichbar ist, um die IMS-Dienstanforderung an eine zweite terminierende Netzwerkdomäne abzuliefern, um die Dienstanforderungsablieferung zur Verbindung des versorgten angerufenen Benutzers neu zu versuchen.

17. Netzwerksystem nach Anspruch 16, wobei beim Bestimmen der Netzwerkdomänenauswahl für die IMS-Dienstanforderung die NeDS gemäß den in der IMS-Dienstanforderung geführten Umleitungsinformationen des CFNRc in dem CS-Netzwerk bestimmt, nicht das CS-Netzwerk zum Abliefern der Dienstanforderung auszuwählen, oder beim Bestimmen, dass der Ablieferungsversuch in dem IMS fehlschlägt, die NeDS gemäß den in der IMS-Dienstanforderung geführten Umleitungsinformationen des CFNRc in dem CS-Netzwerk nicht die Netzwerkdomänen-Auswahlanfrageentität anweist, die Dienstanforderungsablieferung in dem CS-Netzwerk neu zu versuchen.

18. Netzwerksystem nach Anspruch 16, wobei beim Bestimmen, dass der angerufene Benutzer in dem IMS nicht erreichbar ist, die NeDS die Indikation der neuen Bestimmung der Auswahl der terminierenden Netzwerkdomäne, die Umleitungsinformationen führt, zu der Netzwerkdomäne-Auswahlanfrageentität sendet, um so das Routen der IMS-Dienstanforderung durch die Netzwerkdomänen-Auswahlanfrageentität zu dem CS-Netzwerk zum Neuversuch der Dienstanforderungsablieferung, um Umleitungsinformationen zu führen, zu ermöglichen; und das GMSC oder VMSC zum Umgang mit CFNRc in dem CS-Netzwerk gemäß den Umleitungsinformationen beurteilt, ob das CFNRc aufzurufen ist, wenn der angerufene Benutzer in dem CS-Netzwerk nicht erreichbar ist.

19. Netzwerksystem nach Anspruch 16, wobei die NeDS ferner in der Lage ist, lokal eine Aufzeichnung der Bestimmung(en) der Auswahl der terminierenden Netzwerkdomäne dieser Dienstanforderung zu speichern und eine Dienstfehlschlagantwort an die Ursprungsseite zurückzugeben, wenn gemäß der Aufzeichnung bestimmt wird, dass der angerufene Benutzer in der ersten terminierenden Netzwerkdomäne nicht erreichbar ist, und bestimmt wird, dass der angerufene Benutzer auch in der zweiten terminierenden Netzwerkdomäne nicht erreichbar ist.

20. Netzwerksystem nach einem der Ansprüche 16 bis 19, wobei die Netzwerkdomänen-Auswahlanfrageentität eine an den angerufenen Benutzer in dem IMS vergebene Service Call Session Control Function S-CSCF ist und die S-CSCF über eine Schnittstelle der IP Multimedia Service Control ISC mit der NeDS in Dialog tritt.

## Revendications

1. Procédé de délivrance de demande de service, appliqué à un système de réseau comprenant deux domaines de réseau d'arrivée : un réseau Commuté par Circuits, CS, et un Sous-système à Protocole Internet, IP, Multimédia, IMS, le procédé comprenant :
l'acquisition, par une entité d'interrogation de sélection de domaine de réseau dans le système de réseau, de la détermination d'une sélection de domaine de réseau d'arrivée à partir d'une entité de sélection de domaine de réseau, NeDS, dans le système de réseau à la réception d'une demande de service destinée à un utilisateur appelé desservi, et **caractérisé par** la délivrance de la demande de service dans un premier domaine de réseau d'arrivée des deux domaines de réseau d'arrivée spécifiés par la détermination de la sélection de domaine de réseau d'arrivée pour connecter l'utilisateur appelé ;
la tentative à nouveau de la délivrance de demande de service dans un second domaine de réseau d'arrivée des deux domaines de réseau d'arrivée en vue de connecter l'utilisateur appelé, quand l'utilisateur appelé n'est pas joignable dans le premier domaine de réseau d'arrivée.

2. Procédé selon la revendication 1, dans lequel la NeDS ordonne à l'entité d'interrogation de sélection de domaine de réseau de tenter à nouveau la délivrance de demande de service dans le second domaine de réseau d'arrivée quand il est déterminé que l'utilisateur appelé n'est pas joignable dans le premier domaine de réseau d'arrivée.

3. Procédé selon la revendication 2, dans lequel quand le premier domaine de réseau d'arrivée est l'IMS, la NeDS juge s'il convient ou non de délivrer la demande de service au réseau CS en fonction d'une catégorie de service de la demande de service, ordonne à l'entité d'interrogation de sélection de domaine de réseau de tenter à nouveau la délivrance de demande de service dans le réseau CS s'il convient de délivrer la demande de service au réseau CS, et met fin à la délivrance de demande de service s'il ne convient pas de délivrer la demande de service au réseau CS.

4. Procédé selon la revendication 3, dans lequel si la catégorie de service est utilisée pour établir une interaction vocale d'un service de Voix sur IP, VoIP, ou pour établir une interaction vidéo qui peut être convertie en un service vidéo CS, ou pour établir une interaction multimédia contenant un composant vocal VoIP, il est déterminé qu'il est approprié de délivrer la demande de service au réseau CS.

5. Procédé selon la revendication 2, dans lequel la NeDS lance une temporisation lors de la fourniture à l'entité d'interrogation de sélection de domaine de réseau de la détermination de la sélection de domaine de réseau d'arrivée, et détermine que l'utilisateur appelé n'est pas joignable dans le premier domaine de réseau d'arrivée quand la temporisation expire ; l'entité d'interrogation de sélection de domaine de réseau envoie un message à la NeDS pour arrêter la temporisation à la réception d'un message de réponse renvoyé par l'utilisateur appelé, ou à la détermination que la demande de service est délivrée avec succès, ou à la détermination que l'utilisateur appelant décide d'abandonner cette délivrance de demande de service.

6. Procédé selon la revendication 5, dans lequel une durée de la temporisation est établie, modifiée et interrogée par l'intermédiaire d'une interface Ut ou d'une interface de Système de Support d'Exploitation, OSS.

7. Procédé selon la revendication 5, dans lequel
une durée de la temporisation est établie à une valeur aussi longue que la durée d'une temporisation de Renvoi automatique d'appel sur non réponse, CFNRy, et/ou d'une temporisation de Renvoi Automatique d'appel sur utilisateur mobile non joignable, CFNRc, si il est permis de solliciter un service de renvoi automatique d'appel auquel l'utilisateur a souscrit et qui a été activé par l'utilisateur avant que la NeDS ne tente à nouveau la délivrance de demande de service dans le second domaine de réseau d'arrivée ; ou
la durée de la temporisation est établie à une valeur plus courte que la durée de la temporisation de CFNRy et/ou de la temporisation de CFNRc, si il n'est pas permis de solliciter le service de renvoi automatique d'appel auquel l'utilisateur a souscrit et qui a été activé par l'utilisateur avant que la NeDS ne tente à nouveau la délivrance de demande de service dans le second domaine de réseau d'arrivée.

8. Procédé selon la revendication 2, dans lequel l'ordre donné à l'entité d'interrogation de sélection de domaine de réseau par la NeDS de tenter à nouveau la délivrance de demande de service dans le second domaine de réseau d'arrivée comprend :
l'envoi, par la NeDS, d'un message d'annulation de la délivrance de la demande de service à un côté d'arrivée vers lequel la délivrance de demande de service est tentée ;
l'envoi, par la NeDS, d'une nouvelle demande de service portant des informations de routage nécessaires pour la délivrance de demande de service dans le second domaine de réseau d'arrivée à l'entité d'interrogation de sélection de domaine de réseau.

9. Procédé selon la revendication 2, dans lequel la NeDS mémorise en outre localement un enregistrement de la ou des déterminations de la sélection de domaine de réseau d'arrivée de la demande de service, et la NeDS renvoie une réponse d'échec de service au côté expéditeur de la demande de service quand la NeDS détermine que l'utilisateur appelé n'est pas joignable dans le premier domaine de réseau d'arrivée et que l'utilisateur appelé est également non joignable dans le second domaine de réseau d'arrivée en fonction de l'enregistrement.

10. Procédé selon la revendication 1, dans lequel quand le premier domaine de réseau d'arrivée est le réseau CS, la NeDS préétablit les données de CFNRc dans le réseau CS pour l'utilisateur appelé desservi, et un Centre de Commutation Mobile Passerelle, GMSC, ou un Centre de Commutation Mobile Visiteurs, VMSC, destiné à prendre en charge le CFNRc dans le réseau CS réachemine la demande de service vers l'IMS en fonction des données de CFNRc pour tenter à nouveau la délivrance de demande de service dans l'IMS.

11. Procédé selon la revendication 10, dans lequel la demande de service réacheminée vers l'IMS à la suite de la sollicitation de CFNRc porte des informations de réacheminement de CFNRc ; la NeDS détermine de ne pas sélectionner le réseau CS pour délivrer la demande de service en fonction des informations de réacheminement de CFNRc lors de la détermination de la sélection de domaine de réseau d'arrivée pour la demande de service renvoyée par le réseau CS.

12. Procédé selon la revendication 10, dans lequel la demande de service réacheminée vers l'IMS à la suite de la sollicitation de CFNRc porte des informations de réacheminement de CFNRc ; la NeDS n'ordonne pas à l'entité d'interrogation de sélection de domaine de réseau de tenter à nouveau la délivrance de demande de service dans le réseau CS en fonction des informations de réacheminement de CFNRc lors du jugement de la sélection de domaine de réseau d'arrivée pour la demande de service renvoyée par le réseau CS et de la détermination que l'utilisateur appelé est également non joignable dans l'IMS.

13. Procédé selon la revendication 2, dans lequel le premier domaine de réseau d'arrivée est l'IMS, la demande de service acheminée vers le réseau CS pour tenter à nouveau la délivrance de demande de service porte en outre des informations de réacheminement, et la NeDS pré-établit des données de CFNRc dans le réseau CS pour l'utilisateur appelé desservi ; un GMSC ou un VMSC pour prendre en charge le CFNRc dans le réseau CS juge s'il convient ou non de solliciter le CFNRc en fonction des informations de réacheminement quand l'utilisateur appelé n'est pas joignable dans le réseau CS.

14. Procédé selon la revendication 13, dans lequel les informations de réacheminement comprennent des temps de renvoi, et le CFNRc est sollicité si les temps de renvoi sont moins nombreux que les temps maximum autorisés de renvoi établis dans le réseau CS ; ou la sollicitation du CFNRc est interdite si les temps de renvoi ne sont pas moins nombreux que les temps maximum autorisés de renvoi établis dans le réseau CS ; ou
les informations de réacheminement comprennent une raison de renvoi et des temps de renvoi, et le CFNRc est sollicité si les temps de renvoi dus à la raison sont moins nombreux que les temps maximum autorisés de renvoi dus à la même raison établis dans le réseau CS ; ou la sollicitation du CFNRc est interdite si les temps de renvoi dus à la raison ne sont pas moins nombreux que les temps maximum autorisés de renvoi dus à la même raison établis dans le réseau CS.

15. Appareil de communication, comprenant :
un module (600) capable de recevoir une demande d'interrogation pour la détermination d'une sélection de domaine de réseau d'arrivée ;
un module (601) capable de déterminer la sélection de domaine de réseau d'arrivée en fonction de la demande et de sélectionner un second domaine de réseau d'arrivée pour tenter à nouveau la délivrance de demande de service pour connecter un utilisateur appelé quand l'utilisateur appelé n'est pas joignable dans un premier domaine de réseau d'arrivée spécifié par la détermination de la sélection de domaine de réseau d'arrivée ;
un module (602) capable d'envoyer la détermination de la sélection de domaine de réseau d'arrivée en réponse à la demande.

16. Système de réseau, comprenant :
une entité d'interrogation de sélection de domaine de réseau capable d'interroger en vue de déterminer une sélection de domaine de réseau d'arrivée à la réception d'une demande de service de Sous-système à Protocole Internet, IP, Multimédia, IMS,
destinée à un utilisateur appelé desservi, et d'exécuter la délivrance consécutive de la demande de service IMS en fonction de la détermination de la sélection de domaine de réseau d'arrivée ;
une entité de Sélection de Domaine de Réseau, NeDS, capable de fournir à l'entité d'interrogation de sélection de domaine de réseau la détermination de la sélection de domaine de réseau d'arrivée et d'envoyer une indication d'une nouvelle détermination de sélection de domaine de réseau d'arrivée à l'entité d'interrogation de sélection de domaine de réseau et/ou de pré-établir des données de Renvoi automatique d'appel sur utilisateur mobile non joignable, CFNRc, dans un réseau Commuté par Circuits,
CS, quand l'utilisateur appelé n'est pas joignable dans un premier domaine de réseau d'arrivée spécifié par la détermination de la sélection de domaine de réseau d'arrivée,
de façon à délivrer la demande de service IMS à un second domaine de réseau d'arrivée pour tenter à nouveau la délivrance de demande de service pour connecter l'utilisateur appelé desservi.

17. Système de réseau selon la revendication 16, dans lequel à la détermination de la sélection de domaine de réseau pour la demande de service IMS, la NeDS détermine de ne pas sélectionner le réseau CS pour délivrer la demande de service en fonction des informations de réacheminement du CFNRc dans le réseau CS portées dans la demande de service IMS, ou à la détermination que la tentative de délivrance échoue dans l'IMS, la NeDS n'ordonne pas à l'entité d'interrogation de sélection de domaine de réseau de tenter à nouveau la délivrance de demande de service dans le réseau CS en fonction des informations de réacheminement du CFNRc dans le réseau CS portées dans la demande de service IMS.

18. Système de réseau selon la revendication 16, dans lequel à la détermination que l'utilisateur appelé n'est pas joignable dans l'IMS, la NeDS envoie l'indication de la nouvelle détermination de sélection de domaine de réseau d'arrivée portant des informations de réacheminement à l'entité d'interrogation de sélection de domaine de réseau de façon à permettre l'acheminement de la demande de service IMS par l'entité d'interrogation de sélection de domaine de réseau jusqu'au réseau CS afin de tenter à nouveau la délivrance de demande de service pour porter des informations de réacheminement ; le GMSC ou le VMSC pour prendre en charge le CFNRc dans le réseau CS juge si le CFNRc doit être sollicité ou non en fonction des informations de réacheminement quand l'utilisateur appelé n'est pas joignable dans le réseau CS.

19. Système de réseau selon la revendication 16, dans lequel la NeDS est capable en outre de stocker localement un enregistrement de la ou des déterminations de la sélection de domaine de réseau d'arrivée de cette demande de service, et de renvoyer une réponse d'échec de service au côté expéditeur à la détermination que l'utilisateur appelé n'est pas joignable dans le premier domaine de réseau d'arrivée et à la détermination que l'utilisateur appelé est également non joignable dans le second domaine de réseau d'arrivée en fonction de l'enregistrement.

20. Système de réseau selon l'une quelconque des revendications 16 à 19, dans lequel l'entité d'interrogation de sélection de domaine de réseau est une Fonction de Commande de Session d'Appel de Service, S-CSCF, assignée à l'utilisateur appelé dans l'IMS, et la S-CSCF interagit avec la NeDS par l'intermédiaire d'une interface de Commande de Service Multimédia IP, ISC.
